**Europäisches Patentamt**

**European Patent Office**

**Office européen des brevets**

(19)

(11) Veröffentlichungsnummer: **0 270 518**
**A2**

(12)

# EUROPÄISCHE PATENTANMELDUNG

(21) Anmeldenummer: 87890257.6

(22) Anmeldetag: 17.11.87

(51) Int. Cl.⁴: **F 27 D 3/16**
C 21 C 7/072, C 03 B 5/193,
B 22 D 1/00

(30) Priorität: 02.12.86 AT 3209/86

(43) Veröffentlichungstag der Anmeldung:
08.06.88 Patentblatt 88/23

(84) Benannte Vertragsstaaten:
BE CH DE ES FR GB GR IT LI LU NL SE

(71) Anmelder: **Radex Austria Aktiengesellschaft für
feuerfeste Erzeugnisse**
A-9545 Radenthein (AT)

(72) Erfinder: **Illemann, Heinrich
Ringweg 10**
A-9524 St. Magdalen (AT)

**Hütter, Ulrich, Dipl.-Ing.
Sandgasse 4**
A-9560 Feldkirchen (AT)

**Heinricher, Gustav Mario, Dipl.-Ing.
Mitterweg 55**
A-9873 Döbriach (AT)

**Grabner, Bernd, Dipl.-Ing. Dr.**
A-9872 Obermillstatt 148 (AT)

(74) Vertreter: **Leeb, Walther Dr., Patentanwalt et al
Dr.W.Leeb, Dr.E.Müllner, Dipl.Ing.W.Katschinka Postfach
159**
A-1014 Wien (AT)

(54) **Behälter zur Behandlung von hochschmelzenden Stoffen, feuerfester Stein für die Zustellung und Verfahren zum Betrieb eines solchen Behälters.**

(57) Die Erfindung betrifft einen Behälter zur Behandlung von hochschmelzenden Stoffen, wie Metall- und Glasschmelzen, mit mindestens einer in seiner feuerfesten Auskleidung (2, 3, 4), insbesondere im Boden, in Richtung gegen das Behälterinnere verschiebbar angeordneten Gasspüleinrichtung (6), die eine Ummantelung (7) und ein innerhalb dieser angeordnetes, gasdurchlässiges, feuerfestes Material (8) aufweist und der an ihrem vom Behälter abliegenden Ende (12') ein Spülgas für die zu behandelnde Schmelze zugeführt wird. Dabei ist die Gasspüleinrichtung (6) in einem Rohr (5) geführt, das in einem Lochstein (4) der feuerfesten Auskleidung (2, 3, 4) angeordnet ist, und zwischen der Gasspüleinrichtung (6) und diesem Rohr (5) ist ein Spalt (16) vorhanden, der mit einer Leitung (18) für die Zuführung eines Mediums verbunden ist.

Ferner betrifft die Erfindung einen feuerfesten Stein in Form eines Lochsteines (4), der in seinem Zentrum ein mit ihm verbundenes Rohr (5) aus keramischem Material oder Metall aufweist, für die Zustellung eines solchen Behälters.

Zum Betrieb eines erfindungsgemäßen Behälters wird durch den zwischen der Gasspüleinrichtung (6) und dem in dem Lochstein (4) angeordneten Rohr (5) gebildeten Spalt (16) unter Druck ein Medium durchgeleitet.

Fig. 1

EP 0 270 518 A2

Bundesdruckerei Berlin

**Beschreibung**

Behälter zur Behandlung von hochschmelzenden Stoffen, feuerfester Stein für die Zustellung und Verfahren zum Betrieb eines solchen Behälters

Die Erfindung betrifft einen Behälter zur Behandlung von hochschmelzenden Stoffen, wie Metall- und Glasschmelzen, einen feuerfesten Stein für die Zustellung und ein Verfahren zum Betrieb eines solchen Behälters.

Bei zahlreichen Verfahren, die in Behältern zur Behandlung von hochschmelzenden Stoffen, insbesondere in metallurgischen Öfen und Gefäßen sowie auch in Glasöfen, durchgeführt werden, werden sogenannte Gasspülsteine verwendet, die in der feuerfesten Auskleidung dieser Öfen und Gefäße angeordnet sind und mit deren Hilfe verschiedene Gase in die zu behandelnden Metallschmelzen eingeblasen werden. Diese Gasspülsteine werden insbesondere in Konvertern zum Frischen von Roheisen, in Roheisenpfannen, Gießpfannen und Zwischengefäßen (Tundish) beim Stranggießen von Stahl meist im Boden angeordnet, können jedoch in allen diesen Aggregaten und ebenso in anderen metallurgischen Öfen und Gefäßen, z.B. Lichtbogenöfen, und in Glasöfen auch an anderen Stellen in die Auskleidung, z.B. in die Seitenwände, eingebaut werden. Ein sehr häufiger Nachteil der Gasspülsteine besteht bisher darin, daß ihre Haltbarkeit geringer ist als die der feuerfesten Auskleidung in ihrer Umgebung in den betreffenden Behältern, insbesondere in metallurgischen Öfen und Gefäßen, so daß sich dadurch Stillstandszeiten allein durch den vorzeitigen Verschleiß der Gasspülsteine ergeben. Zur Behebung dieser Nachteile sind bereits verschiedene Maßnahmen angewandt worden, von welchen vor allem jene zu erwähnen sind, die den konstruktiven Aufbau und die Austauschbarkeit von Gasspülsteinen betreffen. Beispielsweise ist eine Gasspüleinheit bekannt, die aus einem Lochstein, einem in diesem angeordneten Gasspülstein mit einem Mantel und einem Gaseinleitungsrohr besteht, mittels eines Transportbügels gehandhabt wird und über die Innenseite des betreffenden metallurgischen Gefäßes ausgetauscht werden kann, und eine ähnliche austauschbare Gasspüleinheit ist aus einem mit Blech ummantelten Spülstein in einem Lochstein und einem feuerfesten Block mit einem Gasanschluß aufgebaut, und diese Einheit kann auch von der Außenseite des betreffenden metallurgischen Gefäßes ersetzt werden (DE-A-31 10 204). Eine größere Sicherheit und damit eine längere Haltbarkeit von Gasspülsteinen wird bei einer Konstruktion erreicht, bei der ein Gasspülstein mit einem Spülsteinboden in eine diesen Boden zur Gänze umschließende Ausnehmung eines Sicherungsblockes aus feuerfestem Material eingesetzt ist und ein Gaszuführungsrohr und ein mit diesem verbundenes spiralförmiges Rohr zur Zuführung des Spülgases aufweist, wobei das spiralförmige Rohr von einer doppelten, teilweise vertikal verlaufenden Rohrschlange gebildet und im Sicherungsblock eingebettet ist (EP-B- 105 868). Schließlich ist in diesem Zusammenhang auch noch eine Gasspülanordnung zu erwähnen, bei der wenigstens ein gasdurchlässiger feuerfester Einsatz im Bereich des Futters in der Wandung eines eine Schmelze enthaltenden Behälters in ein durch die Behälterwandung führendes metallisches oder keramisches Rohr gasdicht eingefügt und dieses Rohr in der Behälterwandung längsverschiebbar ge lagert ist (DE-C- 33 18 422). Die Verschiebbarkeit dieses Rohres wird dadurch bewirkt, daß die das Rohr begrenzenden feuerfesten Steine des Futters der Behälterwandung und gegebenenfalls auch die Außenmantelfläche des Rohres ein Gleitmittel, z.B. Graphit, enthalten. Es hat sich jedoch gezeigt, daß die Fuge bzw. der Spalt zwischen dem Rohr, das den gasdurchlässigen feuerfesten Einsatz enthält, und den das Rohr begrenzenden feuerfesten Steinen durch Gleitmittel kaum abzudichten ist, so daß in hohem Maße die Gefahr besteht, daß das Gleitmittel am heißen Ende des gasdurchlässigen Einsatzes, also an dem Ende, das der im Behälter befindlichen Schmelze zugewandt ist, ausgebrannt wird und dann die Fuge für das Eindringen von Schmelze oder Schlacke aus dem Behälter offen wird. Ferner muß bei dieser Gasspülanordnung damit gerechnet werden, daß bei einer thermischen Ausdehnung der feuerfesten Steine, in denen die Gasspülanordnung gelagert ist, die Fugenweite verkleinert und so gering wird, daß diese Anordnung nur noch schwierig verschoben werden kann, oder beim Abkühlen des Behälters eine erhebliche Vergrößerung dieser Fuge eintritt, die gleichfalls zu einem Eindringen von Schmelze oder Schlacke führen kann. Alle diese Veränderungen des Gleitmittels und/oder der Fugenweite haben zur Folge, daß eine Zentrierung der Gasspülanordnung praktisch nicht möglich ist, und aus allen diesen Gründen kann die Funktionsfähigkeit einer Vorrichtung dieser Art nach kurzer Verwendungszeit stark eingeschränkt werden.

Die Erfindung zielt nun darauf ab, die Haltbarkeit von Behältern, wie metallurgischen Öfen, metallurgischen Gefäßen und Glasöfen, in denen ein Spülen mit Gasen unter Verwendung einer Gasspüleinrichtung erfolgt, die in der Behälterwandung längsverschiebbar gelagert ist, durch eine besondere Ausbildung dieser Gasspüleinrichtung zu verbessern. Dabei soll die Haltbarkeit dieser Gasspüleinrichtung insbesondere in Behältern zur Behandlung von Metallschmelzen so weit erhöht werden, daß sie der Haltbarkeit der feuerfesten Auskleidung in ihrer Umgebung entspricht, so daß Stillstandszeiten, wie sie bisher durch einen voreilenden Verschleiß der Gasspülsteine in solchen Behältern häufig auftreten, vermieden werden. Ferner soll die Gasspüleinrichtung in allen Schmelzaggregaten verwendbar sein und es ermöglichen, auch in Konvertern die heutzutage gewünschte Anzahl von etwa 2000 Chargen mit einem voll funktionsfähigen Spülsystem ohne Unterbrechungen zu erreichen.

Es wurde gefunden, daß das angeführte Ziel dann erreicht werden kann, wenn die Gasspüleinrichtung in der feuerfesten Auskleidung des Behälters auf besondere Weise geführt ist. Demnach betrifft die Erfindung einen Behälter zur Behandlung von hochschmelzenden Stoffen, wie Metall- und Glasschmelzen, mit mindestens einer in seiner feuerfesten Auskleidung, insbesondere im Boden, in Richtung gegen das Behälterinnere verschiebbar angeordneten Gasspüleinrichtung, die eine Ummantelung und ein innerhalb dieser angeordnetes, gasdurchlässiges, feuerfestes Material aufweist und der an ihrem vom Behälter abliegenden Ende ein Spülgas für die zu behandelnde Schmelze zugeführt wird, wobei dieser Behälter dadurch gekennzeichnet ist, daß die Gasspüleinrichtung in einem Rohr geführt ist, das in einem Lochstein der feuerfesten Auskleidung angeordnet ist, und zwischen der Gasspüleinrichtung und diesem Rohr ein Spalt vorhanden ist, der mit einer Leitung für die Zuführung eines Mediums verbunden ist.

Der Vorschub der Gasspüleinrichtung in Richtung zum Behälterinneren kann an sich auf jede beliebige geeignete Weise erfolgen und könnte notfalls z.B. auch von Hand durchgeführt werden. Als günstig für diesen Zweck hat sich eine Konstruktion erwiesen, bei der eine Trapezwindespindel von einem Preßluftzylinder mittels eines Ratschenhebels angetrieben wird.

Die in den Behältern gemäß der Erfindung verwendete Gasspüleinrichtung weist in ihrer Ummantelung mehrere, in Richtung von ihrem kalten bis zum heißen Ende betrachtet, das heißt also, von dem vom Behälterinneren abgewendeten Ende in Richtung auf das dem Behälterinneren zugewandten Ende, hintereinander und jeweils in Abstand voneinander angeordnete Spüleinsätze aus einem gasdurchlässigen feuerfesten Material auf, die an der Innenwand der Ummantelung gehalten sind. Diese Spüleinsätze können dann, wenn die Gasspüleinrichtung nur für die Zuführung von Gasen in den Behälter vorgesehen ist, aus einem feuerfesten Material mit normaler erhöhter Porosität bestehen. Soferne jedoch auch eine Zufuhr von flüssigen oder pulverförmigen Stoffen in den Behälter beabsichtigt sein sollte, wird als feuerfestes Material für die Spüleinsätze ein Material mit sogenannten gerichteten Poren verwendet. Unter der Bezeichnung "gerichtete Poren" sind dabei Poren bzw. Kanäle zu verstehen, die sich in einer gewünschten Richtung durchgehend erstrekken, also z.B. bei Gasspülsteinen in Richtung vom kalten zum heißen Steinende ganz durchgehen, und demnach auch durch das feuerfeste Material der erwähnten Spüleinsätze vom kalten bis zum heißen Ende durchgehen. Die Spüleinsätze mit normaler erhöhter Porosität oder gerichteter Porosität werden zweckmäßig mit einem feuerfesten Mörtel in die Ummantelung eingebracht und vorzugsweise an deren Innenwand zusätzlich, z.B. mit Nut und Feder, fixiert, um eine sichere Handhabung und einen sicheren Transport der Gasspüleinrichtung zu gewährleisten. Besonders günstige Ergebnisse werden dann erzielt, wenn die Ummantelung und die Spüleinsätze der Gasspüleinrichtung einen kreisförmigen Querschnitt haben. Diese Querschnitte können jedoch auch z.B. quadratisch oder rechteckig sein. Die Ummantelung kann aus einem Metall, vorzugsweise einem zunderbeständigen Stahlrohr, oder aus einem keramischen Material gebildet sein. Für das Rohr, in welchem die Gasspüleinrichtung geführt ist, gilt hinsichtlich des Materials und des Querschnitts das gleiche wie für die Ummantelung der Gasspüleinrichtung.

Einen weiteren Gegenstand der Erfindung bildet ein feuerfester Stein in Form eines Lochsteines für die Zustellung eines Behälters der angeführten Art, wobei dieser Lochstein in seinem Zentrum ein mit ihm verbundenes Rohr aus keramischem Material oder Metall aufweist, das zur Führung der Gasspüleinrichtung dient. Dieses Rohr kann im einfachsten Fall bei entsprechender Übereinstimmung seiner Abmessungen mit der Ausnehmung in dem betreffenden Lochstein in diesen bloß eingeschoben sein, wird aber im allgemeinen in dem Lochstein mit einem feuerfesten Mörtel fixiert.

Zur exakten Zentrierung und Verschiebbarkeit der Gasspüleinrichtung in dem in den Lochstein eingebauten Rohr weist dieses Rohr Führungen für die Gasspüleinrichtung auf. Diese Führungen können z.B. in Form von vertikalen, geraden oder spiralförmig angeordneten Rippen, z.B. Rippen einer Stärke von 0,2 bis 2 mm, vorliegen.

Schließlich besteht ein weiterer Gegenstand der Erfindung in einem Verfahren zum Betrieb eines Behälters der oben beschriebenen Art. Bei diesem Verfahren wird durch den zwischen der Gasspüleinrichtung und dem in dem Lochstein angeordneten Rohr gebildeten Spalt ein Medium, insbesondere ein Kühlmedium, mit einem Druck durchgeleitet, der mindestens etwas höher als der Druck der in dem Behälter befindlichen Schmelze ist. Im Falle einer Stahlschmelze muß der Druck des durch den Spalt zugeführten Mediums somit zumindest knapp über dem ferrostatischen Druck des Stahlbades liegen. Zum Erzielen eines weiteren Spüleffektes in der zu behandelnden Schmelze kann jedoch das Medium durch diesen Spalt mit einem Druck durchströmengelassen werden, der 1,5 bis 10 mal so hoch wie der Druck der Schmelze ist.

Eine besonders günstige Ausführungsform des Verfahren gemäß der Erfindung besteht darin, daß gleich zu Beginn des Betriebes des Behälters die Gasspüleinrichtung über die Ebene bzw. Höhe der Nachbarsteine hinausgehend in das Behälterinnere vorgeschoben wird, so daß also die Gasspüleinrichtung über die Nachbarsteine in das Behälterinnere vorragt, und dann das bei diesem Vorschieben erreichte Niveau über die gesamte Reise des Behälters zumindest annähernd konstantgehalten wird. Dieses Konstanthalten bietet normalerweise keine Schwierigkeiten, da die Verschleißrate der Gasspüleinrichtung aus der Erfahrung beim Betrieb des betreffenden Behälters üblicherweise bekannt ist. Bei Verwendung eines Preßluftzylinders wird die Gasspüleinrichtung bei einem Hub dieses Zylinders beispielsweise um etwa 0,2 mm gegen das Gefäßinnere zu bewegt, und es können entsprechend dem Verschleiß der Gasspüleinrichtung dieser ein oder mehrere Impulse gegeben werden, um das Vorschubniveau gleichmäßig aufrechtzuerhalten. Es hat sich als günstig erwiesen, die Gasspüleinrichtung jeweils so weit in das Behälterinnere vorzuschieben, daß der dann vorstehende Teil etwa der Hälfte des Durchmessers der Gasspüleinrichtung entspricht, das heißt also, daß z.B. bei einem Durchmesser von 100 mm der in das Innere des Behälters vorstehende Teil etwa 50 mm betragen soll. Bei einem kreisförmigen Querschnitt der Gasspüleinrichtung wird der Durchmesser im allgemeinen 70 bis 150 mm betragen. Zweckmäßig erfolgt der Vorschub jeweils am Ende eines Abstiches einer Charge.

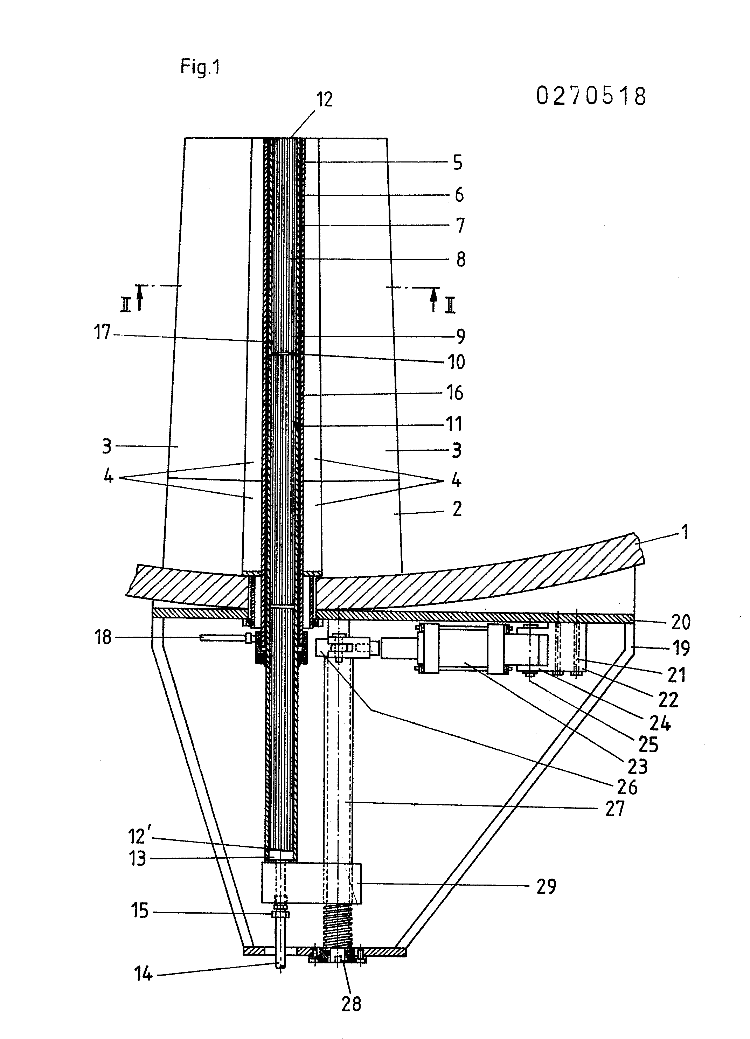

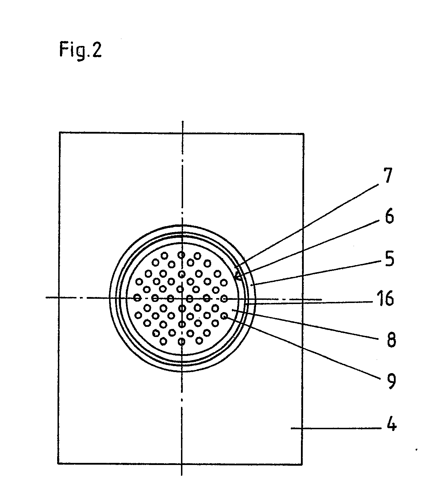

Die Erfindung wird an Hand der Zeichnungen näher erläutert, in welchen eine Ausführungsform für einen Behälter für hoch schmelzende Materialien mit einer in seiner Auskleidung angeordneten Gasspüleinrichtung gemäß der Erfindung dargestellt ist. Dabei zeigen Fig. 1 im Längsschnitt eine Gasspüleinrichtung mit dem zugehörigen Teil des Bodens eines Behälters und für die Bewegung dieser Gasspüleinrichtung dienende Vorschubeinrichtung, und Fig. 2 in einem Schnitt nach der Linie II-II in Fig. 1 den mittleren Teil der Auskleidung des Behälters, jedoch zur Verdeutlichung der Einzelheiten in stark vergrößertem Maßstab.

Bei der in Fig. 1 wiedergegebenen Ausführungsform hat die Auskleidung eines Behälters mit rundem Querschnitt, z.B. die Auskleidung eines Konverters oder Elektroofens, einen Außenmantel 1 mit einem Dauerfutter 2, einem Verschleißfutter 3 und Lochsteinen 4. Jeweils im Zentrum eines Lochsteines 4 ist ein Rohr 5 und zentrisch in diesem eine Gasspüleinrichtung 6 angeordnet, die eine Ummantelung 7 und in dieser jeweils mehrere Spüleinsätze 8 mit gerichteten Poren 9 aufweist. In einer Ummantelung 7, die z.B. aus einem Stahlrohr hoher Zunderfestigkeit bestehen kann, sind jeweils mehrere Spüleinsätze 8 vorhanden und durch Distanzringe 10 voneinander in Abstand gehalten. Die Spüleinsätze 8 sind mit einem feuerfesten Mörtel (nicht dargestellt) in die Ummantelung 7 eingebaut und in dieser mit einer Fixiereinrichtung 11, z.B. mit Nut und Feder, befestigt.

Die Gasspüleinrichtung 6 geht durch die ganze feuerfeste Auskleidung, bei dem gezeigten Beispiel durch das Dauerfutter 2, das Verschleißfutter 3 und die Lochsteine 4, des Behälters durch und mündet mit ihrem einen Ende, dem heißen Ende 12, in das Behälterinnere, wogegen ihr anderes Ende, das kalte Ende 12', weit außerhalb des Behälters liegen kann. Dieses kalte Ende 12' ist, beispielsweise über einen angeschweißten Zwischenboden mit Durchbrechungen, zweckmäßig mit einer Gasverteilungskammer 13 verbunden, der mittels eines Gaszuführungsrohres 14 mit einer Verschraubung 15 ein gasförmiges oder flüssiges Medium oder ein Trägergas mit einem pulverförmigen Material - im Falle von gerichteten Poren können ohne weiteres auch feinkörnige feste Stoffe verwendet werden - zugeführt werden kann. Die Gasspüleinrichtung 6 läßt sich ohne Probleme mit Drücken bis zu etwa 20 bar betreiben.

Die Gasspüleinrichtung 6 muß in den zugehörigen Lochsteinen 4 leicht in Richtung auf das Gefäßinnere vorschiebbar sein. Zu diesem Zweck ist sie in dem Rohr 5 auf solche Weise angeordnet, daß zwischen ihr und diesem Rohr ein Spalt 16 verbleibt. Zur exakten Einstellung und Zentrierung der Gasspüleinrichtung 6 in diesem Spalt 16 sind Führungen 17 an der Innenseite des Rohres 5, z.B. in Form von vertikalen, gerade verlaufenen oder spiralförmig angeordneten Rippen, beispielsweise einer Stärke von 0,2 bis 2 mm, vorgesehen. Das Rohr 5 kann aus einem keramischen Material oder einem Metall, z.B. Stahl, bestehen, wobei die Bezeichnung "Rohr" ebenso wie im Falle der Ummantelung 7 der Gasspüleinrichtung 6 nicht nur Elemente mit einem runden, sondern auch mit einem eckigen Querschnitt umfassen soll.

In den Spalt 16 zwischen dem Rohr 5 und der Gasspüleinrichtung 6 kann an deren kaltem Ende 12' mittels einer Leitung 18 ein Medium zugeführt werden. In den meisten Fällen wird dieses Medium ein gasförmiges oder flüssiges Kühlmedium sein, um den Verschleiß der Gasspüleinrichtung zu vermindern, doch kann durch den Spalt 16 auch jedwedes gewünschte weitere Behandlungsmedium für die in dem Behälter befindliche Schmelze eingebracht werden. Der Druck des durch den Spalt 16 strömenden Mediums muß dabei mindestens etwas höher sein als der Druck in der in dem Behälter zu behandelnden Schmelze, also z.B. knapp über dem ferrostatischen Druck einer Stahlschmelze liegen. Vorzugsweise wird das Medium durch den Spalt 16 mit einem Druck durchströmen gelassen, der 1,5 bis 10 mal so hoch wie der Druck dieser Schmelze ist.

Besonders zweckmäßig ist es, wenn ein Lochstein 4 und das zugehörige Rohr 5 bzw. ein der Länge des Lochsteines 4 entsprechender Teil eines solchen Rohres in Form einer vorgefertigten Einheit vorliegen, da dies einen raschen Aus- und Einbau aus dem und in den Behälter ermöglicht. Der Einbau der Gasspüleinrichtung 6 in das Rohr 5 ist in jedem Fall einfach, da diese Einrichtung in das Rohr lediglich eingeschoben zu werden braucht.

Die für den Vorschub der Gasspüleinrichtung 6 vorgesehene Einrichtung ist für den Gegenstand der Erfindung an sich von untergeordneter Bedeutung und daher lediglich beispielsweise und nur in groben Zügen dargestellt. Diese Vorschubeinrichtung ist zweckmäßig in einem Gehäuse 19, das am Mantel 1 des Behälters befestigt ist, montiert. In dem Gehäuse 19 ist an einer Tragplatte 20, z.B. mit Schrauben 21, ein Sockel 22 befestigt, an dem ein Preßluftzylinder 23 in einer Gabel 24 um eine Achse 25 schwenkbar gelagert ist. Mit diesem Preßluftzylinder 23 ist ein Ratschenhebel 26 für den Antrieb einer Trapezwindespindel 27 verbunden, die in einem Spindellager 28 gelagert ist und eine Spindelmutter 29 aufweist, in der die Gasspüleinrichtung 6 montiert ist und dadurch gegen das Gefäßinnere zu vorgeschoben werden kann. Dieser Vorschub erfolgt von unten nach oben, wenn die Gasspüleinrichtung im Boden eines Behälters angeordnet ist, und in seitlicher Richtung, wenn die Gasspüleinrichtung z.B. in einer Seitenwand eines Behälters angeordnet ist. In allen Fällen wird die Gasspüleinrichtung aber immer in Richtung auf das Gefäßinnere zu bewegt und entsprechend dem Verschleiß der Behälterauskleidung nachgeschoben. Dabei soll die Gasspüleinrichtung schon vor Beginn des Betriebes des betreffenden Gefäßes über die feuerfeste Auskleidung hinausragend in das Behälterinnere vorstehen.

Es ist für den Fachmann klar, daß in einem Behälter der gegenständlichen Art, und insbesondere in metallurgischen Öfen und Gefäßen, im Boden und/oder den Seitenwänden und/oder sogar in der Decke, soferne eine solche vorhanden ist, jeweils auch mehrere Gasspüleinrichtungen gemäß der Erfindung vorhanden sein können. In allen diesen Fällen ermöglicht die erfindungsgemäße Konstruktion im Vergleich zu den bisher üblichen Gasspülsteinen eine längere Brauchbarkeit.

**Patentansprüche**

1. Behälter zur Behandlung von hochschmelzenden Stoffen, wie Metall- und Glasschmelzen, mit mindestens einer in seiner feuerfesten Auskleidung, insbesondere im Boden, in Richtung gegen das Behälterinnere verschiebbar angeordneten Gasspüleinrichtung, die eine Ummantelung und ein innerhalb dieser angeordnetes, gasdurchlässiges, feuerfestes Material aufweist und der an ihrem vom Behälter abliegenden Ende ein Spülgas für die zu behandelnde Schmelze zugeführt wird, dadurch gekennzeichnet, daß die Gasspüleinrichtung (6) in einem Rohr (5) geführt ist, das in einem Lochstein (4) der feuerfesten Auskleidung (2, 3, 4) angeordnet ist, und zwischen der Gasspüleinrichtung (6) und diesem Rohr (5) ein Spalt (16) vorhanden ist, der mit einer Leitung (18) für die Zuführung eines Mediums verbunden ist.

2. Feuerfester Stein in Form eines Lochsteines für die Zustellung eines Behälters nach Anspruch 1, dadurch gekennzeichnet, daß der Lochstein (4) in seinem Zentrum ein mit ihm verbundenes Rohr (5) aus keramischem Material oder Metall aufweist.

3. Verfahren zum Betrieb eines Behälters nach Anspruch 1, dadurch gekennzeichnet, daß durch den zwischen der Gasspüleinrichtung (6) und dem in dem Lochstein (4) angeordneten Rohr (5) gebildeten Spalt (16) ein Medium, insbesondere ein Kühlmedium, mit einem Druck durchgeleitet wird, der mindestens etwas höher als der Druck der in dem Behälter befindlichen Schmelze ist.

4. Verfahren nach Anspruch 3, dadurch gekennzeichnet, daß das Medium durch den Spalt (16) mit einem Druck durchströmen gelassen wird, der 1,5 bis 10 mal so hoch wie der Druck der Schmelze ist.

5. Verfahren nach Anspruch 3 oder 4, dadurch gekennzeichnet, daß gleich zu Beginn des Betriebes des Behälters die Gasspüleinrichtung (6) über die Ebene der Nachbarsteine (3) hinausgehend in das Behälterinnere vorgeschoben und das bei diesem Vorschieben erreichte Niveau über die gesamte Reise des Behälters zumindest annähernd konstantgehalten wird.

6. Verfahren nach Anspruch 5, dadurch gekennzeichnet, daß die Gasspüleinrichtung (6) jeweils so weit in das Behälterinnere vorgeschoben wird, daß die Länge des Vorschubes etwa der Hälfte des Durchmessers der Gasspüleinrichtung entspricht.

Fig.1

0270518

Fig.2